# EUROPEAN PATENT APPLICATION

(11) **EP 4 151 399 A1**
(43) Date of publication of application: **22.03.2023**
(21) Application number: 21804418.8
(22) Date of filing: 14.05.2021
(51) Int. Cl.: B29L 9/00, B29C 70/48, B29C 70/54

(54) **FLOW MEDIUM, FRP MOLDED ARTICLE, AND METHOD FOR PRODUCING FRP MOLDED ARTICLE**

(30) Priority: 14.05.2020 JP 2020085005
(71) Applicant: Kanazawa Institute of Technology, Ishikawa 921-8501 (JP)
(72) Inventor: UZAWA, Kiyoshi, Nonoichi-shi, Ishikawa 921-9501 (JP); SAKUMA, Tadashi, Nonoichi-shi, Ishikawa 921-9501 (JP); INUI, Nobuaki, Nonoichi-shi, Ishikawa 921-9501 (JP); MATSUMOTO, Hiroki, Nonoichi-shi, Ishikawa 921-9501 (JP); HORI, Masayoshi, Nonoichi-shi, Ishikawa 921-9501 (JP)
(74) Representative: FRKelly
(86) International application number: PCT/JP2021/018354
(87) International publication number: WO 2021/230343

(57) **Abstract**

To provide a flow medium, an FRP molded product and a manufacturing method of the FRP molded product that enhance plane smoothness of the FRP molded product and suppress the occurrence of vulnerable parts.

Flow medium 10 of the present invention is in a sheet shape containing fibers made of phenoxy resin. Since the phenoxy resin has particularly excellent compatibility with the epoxy resin generally used as the matrix resin 40, at least a part of the flow medium is integrated with the matrix resin by dissolving or bonding, and finally both are hardened in an integrated manner. As a result, fiber base material 30, flow medium 10 and matrix resin 40 are in a state of being strongly bonded together, and it is possible to prevent the occurrence of weak portions that cause separation between layers as often happening in conventional products. In addition, since it is not necessary to remove the flow medium together with peel ply after curing and it is not necessary dispose them. The conventional problem of increased industrial waste is solved.

## Description

### TECHNICAL FIELD

This invention relates to a flow medium, an FRP molded product and a manufacturing method of the FRP molded product that can enhance plane smoothness of the FRP molded product and suppress the occurrence of vulnerable parts.

### BACKGROUND

Known as methods to mold FRP (Fiber Reinforced Plastics) are RTM (Resin Transfer Molding), VaRTM (Vacuum Assisted RTM), HP-RTM (High Pressure RTM), infusion molding, and the like.

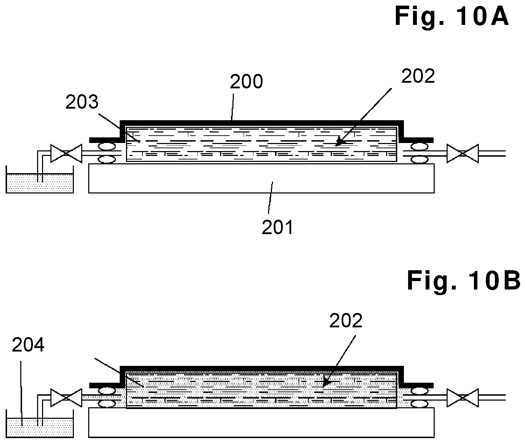

For example, as shown in Fig. 10A, VaRTM forms a cavity 202 with inner faces of a vacuum bag 200 and a mold 201, and places a fiber base material 203 or a laminated body of fiber base materials inside the cavity 202. Next, as shown in Fig. 10B, while evacuating from one side of the cavity 202, a matrix resin 204 is injected from the other side to replace air inside the cavity 202 with the matrix resin 204, thereby impregnating the fiber base material 203 with the matrix resin 204. Finally, the mold 201 is heated as necessary to harden the matrix resin 204, thereby manufacturing an FRP molded product.

Also, in manufacturing a large-scale or thick FRP molded product, a preform may be made by sandwiching the fiber base material with upper and lower shaping molds into a specified shape, placing this preform inside a mold, and hardening it with a matrix resin.

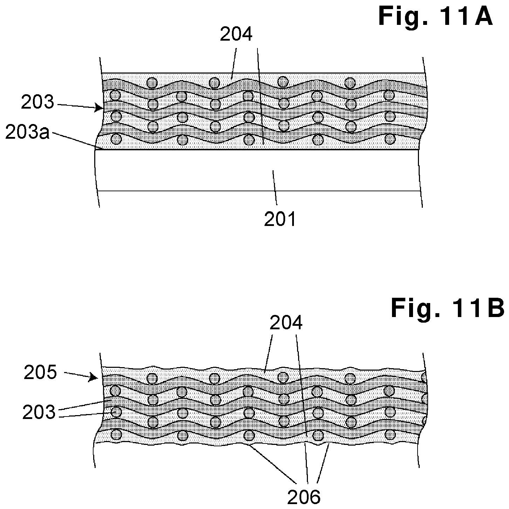

As shown in Fig. 11A, because in general the front face side 203a (the side in contact with the mold 201) of the fiber base material 203 is molded in a state where the fiber base material 203 is in contact with the mold 201, the matrix resin 204 layer becomes thin. Therefore, as shown in Fig. 11B, being greatly influenced by the different degrees of contraction between parts with more and less matrix resin, unevenness 206 occurring on the surface of the FRP molded product 205 becomes large, causing a problem of spoiling plane smoothness. There is also a problem that the fiber base material 203 is exposed by only slightly polishing the surface of the FRP molded product 205 in performing coating or the like.

Furthermore, if the fiber base material 203 is a fabric, there may be a problem that the resin does not enter spaces surrounded with warp and weft and a gap with the mold 201, generating microvoids.

As another reason that microvoids and dry spots occur in the FRP molded product is fluidity of the matrix resin. As the matrix resin infiltrates the fiber base material by tracing routes with the minimum flow resistance inside the cavity, because in general the fiber base material has a large flow resistance that prevents the matrix resin from flowing, the amount of impregnated matrix resin becomes uneven depending on the location of the fiber base material, and it hardens in such a state.

Then, known is a flow medium that can improve fluidity and diffusivity of the matrix resin (Patent Document 1). Ordinarily, a flow medium is placed between the fiber base material and the vacuum bag, and after hardening, the flow medium is left as is and made part of the fiber base material, or peeled off the fiber base material together with a peel ply and discarded.

### RELATED ART

### NON PATENT LITERATURE(S)

Patent Doc. 1: JP Laid-Open Patent Application Publication 2009-269283

### SUMMARY OF THE INVENTION

### OBJECTS OF THE INVENTION(S)

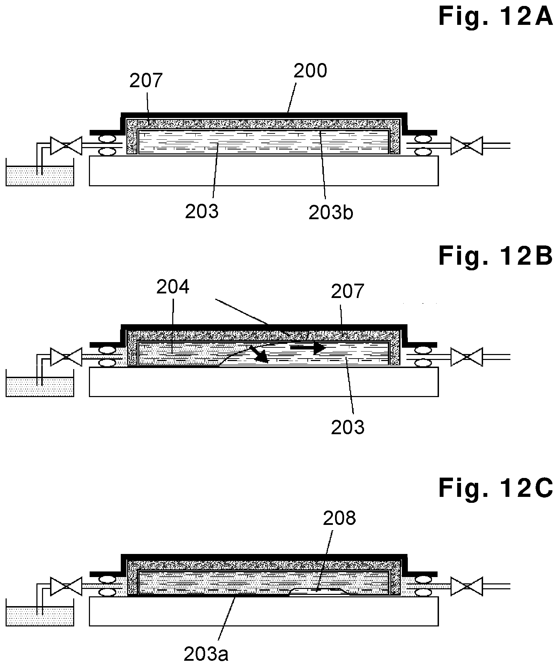

However, even if the flow medium is used, the following problems occur.
As shown in Fig. 12A, ordinarily the flow medium 207 is placed on the back face side 203b (the side in contact with the vacuum bag 200) of the fiber base material 203. If the speed of the matrix resin 204 that flows/diffuses inside the flow medium 207 is too high relative to the speed of the matrix resin 204 that flows/diffuses on the surface or interior of the fiber base material 203 as shown in Fig. 12B, a dry spot 208 can occur on the front face side 203a (design face side) of the fiber base material 203 as shown in Fig. 12C.

Also, because the raw material of the conventional flow medium 207 comprises polyethylene, polypropylene, nylon, or the like that has a low adhesiveness with the matrix resin, if the flow medium 207 is made part of the fiber base material 203 after hardening, there is a problem that exfoliation can easily occur between layers of the flow medium 207 and the matrix resin 204, forming a vulnerable part. Also, if the flow medium 207 is peeled off together with the peel ply after molding, there is a problem of increasing industrial waste.

Considering the above-mentioned problems, this invention has the objective to offer a flow medium, an FRP molded product and a manufacturing method of the FRP molded product that can enhance plane smoothness of the FRP molded product and suppress the occurrence of vulnerable parts.

### MEANS TO SOLVE THE PROBLEM(S)

The flow medium of the present invention is characterized in being in a sheet shape containing fibers made of phenoxy resin.

Also, the phenoxy resin is characterized in having a weight average molecular weight of 25,000 to 50,000.

The FRP molded product of the present invention is characterized that the FRP molded product is obtained by impregnating a fiber base material with a matrix resin using a flow medium and hardening the fiber base material, the flow medium is a sheet shape containing fibers made of a phenoxy resin, and the fiber base material and the flow medium are stacked, at least part of the flow medium is hardened in a state where the part of the flow medium is integrated with the matrix resin by dissolution or adhesion.

Also, the flow medium is stacked on a front face side of the fiber base material.

Also, the matrix resin is characterized in being an epoxy resin.

A manufacturing method of an FRP molded product wherein a fiber base material is impregnated with a matrix resin and hardened using a flow medium inside a cavity, includes a step of stacking the fiber base material and a sheet-shaped flow medium comprising fibers made of a phenoxy resin inside the cavity, and a step of injecting an epoxy resin as the matrix resin, thereby integrating at least part of the flow medium with the matrix resin by dissolution or adhesion, wherein the flow medium is placed on a surface of a mold inside the cavity, and the hardened flow medium becomes a design face.

### ADVANTAGE(S) OF THE INVENTION

The flow medium of this invention has a phenoxy resin as its raw material. Because phenoxy resins are especially excellent in compatibility with epoxy resins that are used as the matrix resin in general, at least part of the flow medium dissolves or adheres to the matrix resin, and they eventually harden in an integrated state. Thereby, the fiber base material, the flow medium, and the matrix resin come into a strongly bonded state, which can prevent the occurrence of vulnerable parts causing exfoliation of layers as in the conventional case.

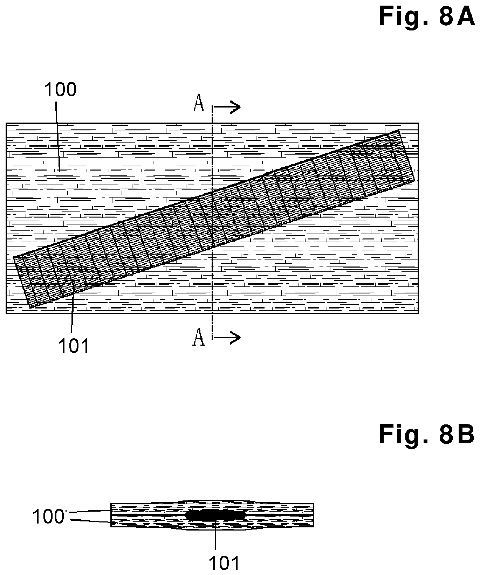

Also, because there is no need to peel off the flow medium together with the peel ply and discard it after hardening, the conventional problem of increasing industrial waste can be solved. Furthermore, because there is no need to discard the flow medium, by placing the flow medium 101 between layers of the laminated fiber base material 100 as shown in Figs. 8A and 8B for example, not only the flow of the matrix resin inside the cavity can be controlled, but also the flow medium 101 can be used as part of the FRP molded product without discarding it after hardening.

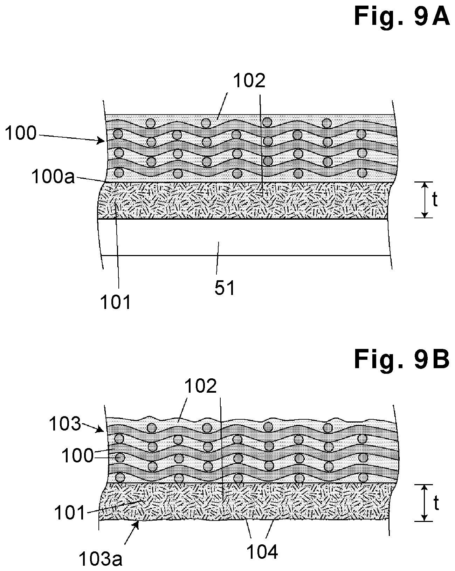

As shown in Fig. 9A, if the flow medium 101 is stacked on the front face side 100a (design face side) of the fiber base material 100, thickness t of the front face side 100a increases by the amount that the matrix resin 102 is integrated with the flow medium 101 compared with the case of not using the flow medium 101. Therefore, it becomes harder to be influenced by contraction when the matrix resin 102 hardens, and as shown in Fig. 9B, unevenness 104 occurring on the front face 103a of the FRP molded product 103 can be suppressed, increasing its plane smoothness. Furthermore, by thickness t of the front face 103a of the FRP molded product 103 increasing, even if the front face 103a of the FRP molded product 103 is polished in performing coating for example, the fiber base material 100 can be prevented from being exposed. In other words, because at least part of the flow medium firmly hardens in a state integrated with the matrix resin in this invention, it has become possible to place the flow medium on the front face side (design face side) of the fiber base material.

From the point of view of moldability, the weight-average molecular weight of the phenoxy resin should preferably be within a range of 25,000-50,000, and from the point of view of facilitating fiberization of the phenoxy resin, it should preferably be within a range of 35,000-45,000.

### BRIEF DESCRIPTIONS OF THE DRAWINGS

Figs. 1A and 1B are side views showing a flow medium.
Fig. 2A is a cross-sectional view showing schematically a state before impregnating stacked flow medium and fiber base material with the matrix resin, Fig. 2B an expanded view of the part surrounded with a circle in Fig. 2A, Fig. 2C is a cross-sectional view showing schematically a state where the stacked flow medium and fiber base material are impregnated with a matrix resin and hardened, Fig. 2D is an expanded view of the part surrounded with a circle in Fig. 2C, and Fig. 2E is a cross-sectional view of an actually-manufactured FRP molded product.
Figs. 3A to 3E explain a manufacturing method of the FRP molded product.
Fig. 4 includes maps showing the degrees of fluidity and diffusivity of a matrix resin in an embodiment, where (A) is without the flow medium, and (B) is with the flow medium.
Fig. 5 is a plot showing the relationship between injection time and impregnation distance of the matrix resin.
Figs. 6A to 6D are expanded views from the front face side (design face side) of the FRP molded product, where Fig. 6A and Fig. 6B are without the flow medium, and Fig. 6C and Fig. 6D are with the flow medium.
Fig. 7 includes a map and a plot of the uneven cross-sectional shape of the front face of the FRP molded product measured with a digital microscope.
Fig. 8A is a plan view and Fig. 8B is an A-A line arrow view, both of which showing another example of using the flow medium.
Fig. 9A is a cross-sectional view showing a state where the flow medium is stacked on the front face side (design face side) of the fiber base material and Fig. 9B is a cross-sectional view showing a state after hardening.
Fig. 10A and Fig. 10B are cross-sectional views for explaining a manufacturing method of the FRP molded product using VaRTM.
Fig. 11A and Fig. 11B are cross-sectional views for explaining the internal structure of the general FRP molded product.
Figs. 12A to 12C are cross-sectional views showing the processes until a dry spot is formed on the front face side (design face side) of the fiber base material.

### DETAILED DESCRIPTIONS OF THE PREFERRED EMBODIMENT(S)

An embodiment of the flow medium of this invention is explained.

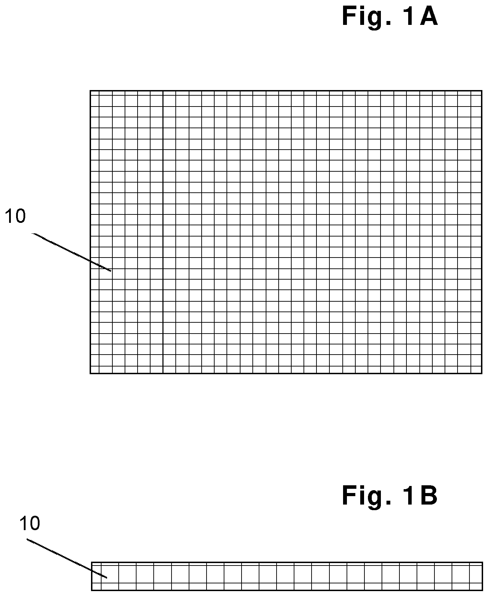

As shown in Fig. 1, the flow medium 10 has a sheet shape comprising fibers made of a phenoxy resin. The flow medium 10 is used for improving fluidity/diffusivity of the matrix resin inside the cavity. Included as the flow medium 10 of this invention are a fabric or knit containing fibers made of a phenoxy resin as raw threads, fibers made of a phenoxy resin as raw threads arranged and fixed within a plane, and an unwoven fabric having fibers made of a phenoxy resin bonded.

Phenoxy resins are thermoplastic resins that have in their molecules a unit expressed by the following general formula (I) and a degree of polymerization of about 18-70, and can also be copolymers with other ingredients. Phenoxy resins are known to show excellent compatibility with epoxy resins. The ratio occupied with the part made of the unit expressed by the general formula (I) can be 80-99% of the whole phenoxy resin molecule and even 90-99%, and setting it within these ranges is preferable in respects of solubility to solvents and compatibility with epoxy resins.

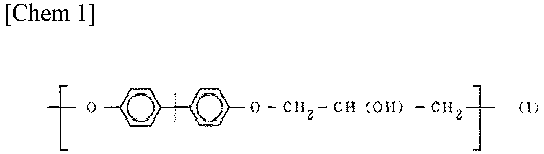

A phenoxy resin is mixed with a solvent, an active material is added, and afterwards the solvent is removed to obtain a planar solid matter of phenoxy resin.

Listed as methods to fiberize a phenoxy resin are, for example, a method where a phenoxy resin is processed into a planar shape, afterwards cut into thin and long thread shapes or cut short and spun into a thread, a method where a liquid-state phenoxy resin is cooled and elongated while being pushed out of a nozzle into a monofilament, and a method where a phenoxy resin solution is fiberized by electrospinning. A multifilament made by twisting together a phenoxy resin filament and a filament made of nylon or another material can be made a raw material of the flow medium 10.

From the point of view of moldability, the weight-average molecular weight of the phenoxy resin should preferably be 25,000-50,000, and in the case of melt spinning 35,000-45,000 is preferred to facilitate fiberizing the phenoxy resin although it is not limited to this range.

As the method to process the fiberized phenoxy resin into a fabric, knit, or unwoven fabric, a commonly-known technique can be used, and therefore its explanation is omitted here.

Next, the FRP molded product of this invention is explained.

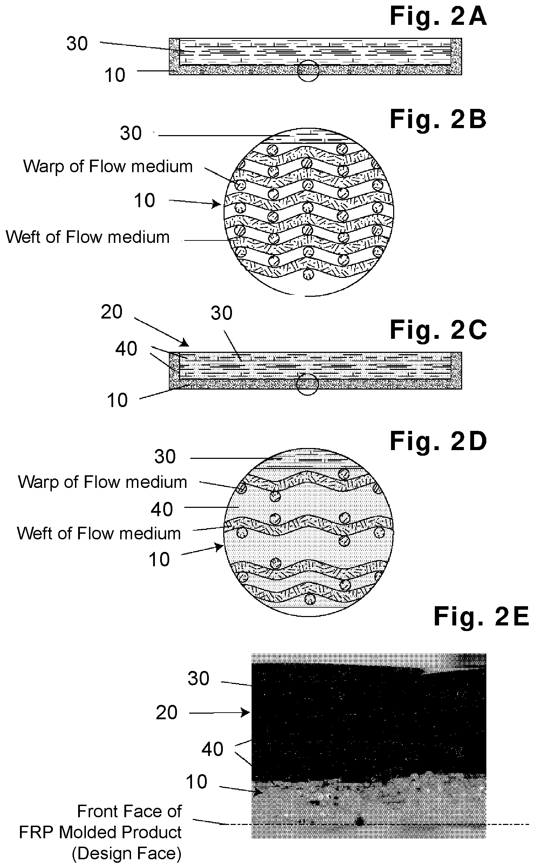

As shown in Fig. 2, the FRP molded product 20 is formed by impregnating the fiber base material 30 with the matrix resin 40 using the flow medium 10 and hardening it. In Fig. 2 a fabric flow medium 10 is used. Fig. 2A is a cross-sectional view showing schematically a state before impregnating the stacked flow medium 10 and fiber base material 30 with the matrix resin 40, Fig. 2B is an expanded view of the part surrounded with a circle in Fig. 2A, Fig. 2C is a cross-sectional view showing schematically a state where the stacked flow medium 10 and fiber base material 30 are impregnated with the matrix resin 40 and hardened, Fig. 2D is an expanded view of the part surrounded with a circle in Fig. 2C, and Fig. 2E is a cross-sectional photo of the actually-manufactured FRP molded product 20.

When Figs. 2B and 2D are compared, in Fig. 2D hardening occurred in a state where part of the flow medium 10 is integrated with the matrix resin 40. The flow medium 10 containing fibers made of a phenoxy resin is excellent in compatibility with the matrix resin 40 (especially epoxy resins). Therefore, when the matrix resin 40 is injected to the cavity when molding, the matrix resin 40 quicky flows/diffuses due to the effect of the flow medium 10, and at least part of the flow medium 10 dissolves or adheres, eventually hardening in a state where the matrix resin 40 and the flow medium 10 are strongly integrated. The whole flow medium 10 can also dissolve or adhere to the matrix resin 40. In fact, it is evident from the cross-sectional photo in Fig. 2E that hardening occurred in a state where part of the flow medium 10 dissolved or adhered to the matrix resin 40.

Allowed as the fiber base material 30 are commonly-known materials such as carbon fibers, polyester fibers, polyamide fibers, cellulose fibers, aramid fibers, polypropylene fibers, and glass fibers, and combinations of two or more of them.

As the form of the fiber base material 30, discontinuous fibers such as a chopped fiber bundle, fabrics made of continuous fibers, or the like can be used. Because discontinuous fibers have more fluidity than fabrics made of continuous fibers, and therefore are excellent in shapability, having advantages in compatibility with three-dimensional shapes, hardly having wrinkles or the like, and producing little scrap materials. Also, a preform of the fiber base material 30 can be used. A discontinuous fiber is manufactured by cutting a fiber bundle made of continuous fibers into a specified length (converting into a chopped form). Then, this discontinuous fiber bundles can be scattered/stacked in random directions and tentatively fixed with a binder into a sheet, manufacturing the fiber base material 30. The "fiber base material 30" in this specification includes its preform.

The matrix resin 40 can be either thermosetting or thermoplastic.

As the thermosetting resin, although there is no limitation as far as it has compatibility with the flow medium 10, for example, epoxy resins, urethane resins, vinyl ester resins, unsaturated polyester resins, and phenol resins can be listed. Epoxy resins are especially preferable because they are excellent in compatibility with phenoxy resins that are raw materials of the flow medium 10.

Preferably used as the thermoplastic resin are in-situ polymerization type PA6, in-situ polymerization type acrylic resins (methyl methacrylate resins), in-situ polymerization type urethane resins, and the like

These thermoplastic resins and thermosetting resins can be used alone or in a mixture of two or more kinds.

Next, explained is the manufacturing method of the FRP molded product of this invention. Although in this embodiment a case of using the VaRTM method is explained, this invention is not limited to this but can be applied to other methods such as infusion molding where the FRP molded product is manufactured by impregnating, hardening, or polymerizing the fiber base material with the matrix resin inside the cavity.

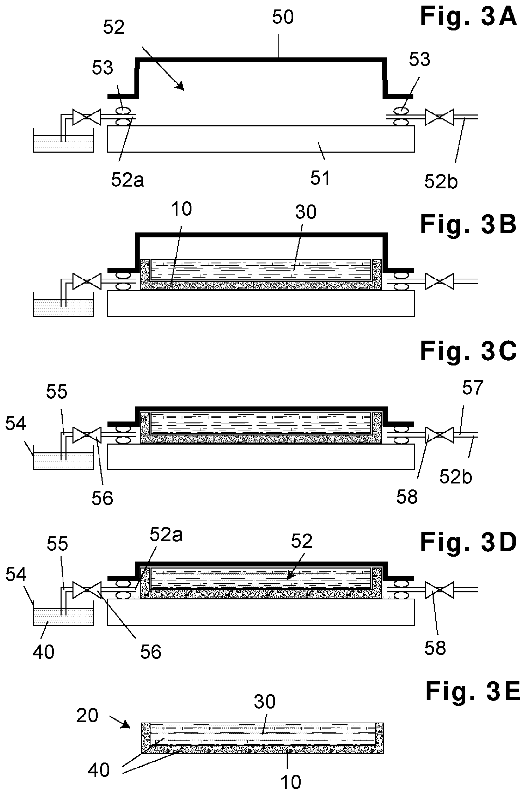

As shown in Fig. 3A, the cavity 52 is formed with the vacuum bag 50 and the mold 51, and the cavity 52 is provided with a resin injection port 52a and a suction port 52b. Gaps between the vacuum bag 50 and the mold 51 are sealed with sealing materials 53. Note that the structure of the cavity 52 is not limited to the one shown, but another can be chosen as appropriate.

First, as shown in Fig. 3B, the fiber base material 30 and the flow medium 10 are placed stacked inside the cavity 52. Although in Fig. 3 the flow medium 10 is placed on the front face side of the fiber base material 30, it can be placed on the back face side. At this time, if necessary, the interior of the cavity 52 is heated to a specified temperature.

Next, as shown in Fig. 3C, a resin injection route 55 connected to a resin tank 54 is closed with a valve 56, and a suction route 57 connected to a vacuum pump (not shown) is opened with a valve 58. Then, through the suction port 52b of the suction route 57, the interior of the cavity 52 is suction-evacuated.

Next, as shown in Fig. 3D, the valve 58 is closed, and the valve 56 is opened, thereby pressure-injecting the matrix resin 40 in the resin tank 54 to the cavity 52 through the resin injection route 55 and the resin injection port 52a.

By the effect of the flow medium 10, the matrix resin 40 quickly flows/diffuses inside the cavity 52. Once the matrix resin 40 has reached the entire area of the cavity 52, a resin pressure (static pressure) is applied to impregnate the fiber base material 30 and the flow medium 10 sufficiently with the matrix resin 40. Then, the valve 56 is closed and kept closed until specified time passes to harden the matrix resin 40. At this time, because the flow medium 10 containing fibers made of a phenoxy resin is excellent in compatibility with the matrix resin 40 (especially epoxy resins) as mentioned above, at least part (or the whole) of the flow medium 10 dissolves or adheres. Eventually, hardening occurs in a state where the matrix resin 40 and the flow medium 10 are integrated.

As shown in Fig. 3E, by taking the FRP molded product 20 out of the cavity 52, a series of manufacturing processes is complete.

### Embodiment

Used as the fiber base material was Carbon Cloth 12K plain-woven material (400 g/m²) × 4 ply 90 mm × 600 mm by Mitsubishi Rayon Co., Ltd. The fiber base material without a flow medium is shorter than 600 mm.

Used as the flow medium was raw threads of a phenoxy resin arranged in a plane into a sheet. The flow medium was placed between the resin base material and a mold.

Used as the phenoxy resin was PKHC manufactured by Gabriel Performance Products, LLC.

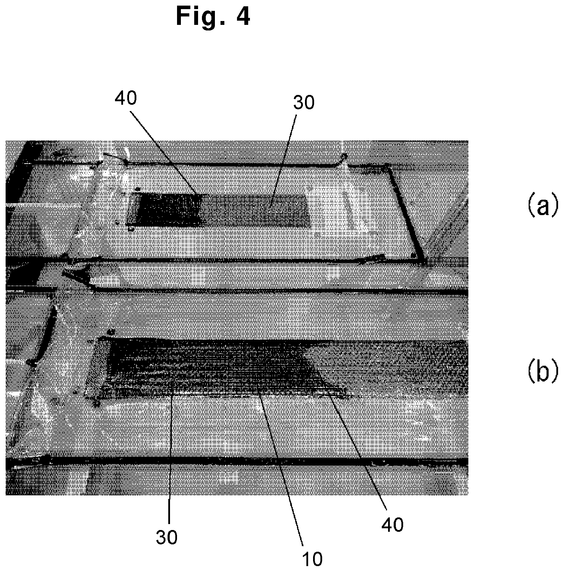

VaRTM was performed in the above-mentioned conditions. Fig. 4 shows a state when 40 minutes have passed since starting the injection of the matrix resin, where (A) of Fig. 4 is without the flow medium 10, and (B) of Fig. 4 is with the flow medium 10. In Fig. 4, the matrix resin 40 was injected from the left side, and air was sucked from the right side.

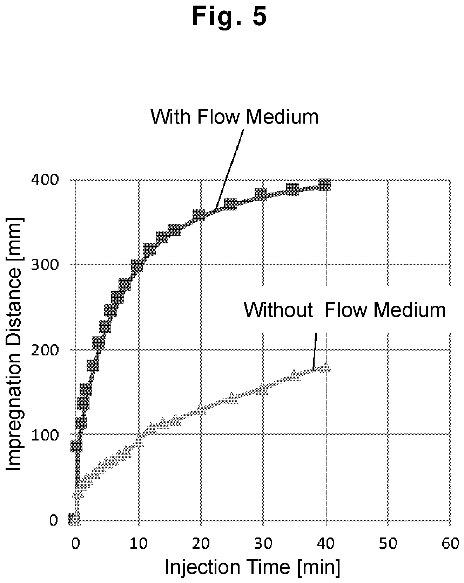

As plotted in Fig. 5, while the impregnation distance is 200 mm or shorter without the flow medium, it reached nearly 400 mm with the flow medium.

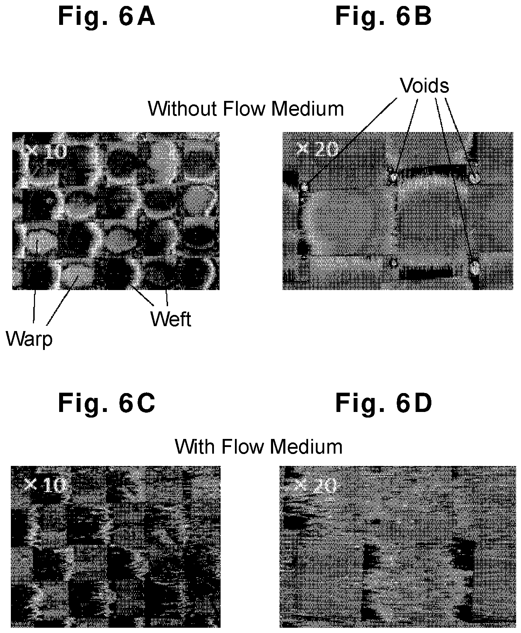

Figs. 6A to 6D are expanded views of the completed FRP molded product viewed from its front face side (design face side), where Fig. 6A and Fig. 6B are without the flow medium, and Fig. 6C and Fig. 6D are with the flow medium. Without the flow medium, voids occurred in spaces surrounded with warp and weft of carbon fibers. With the flow medium, although the phenoxy resin fibers are seen through, the surface was smooth, and no void occurred.

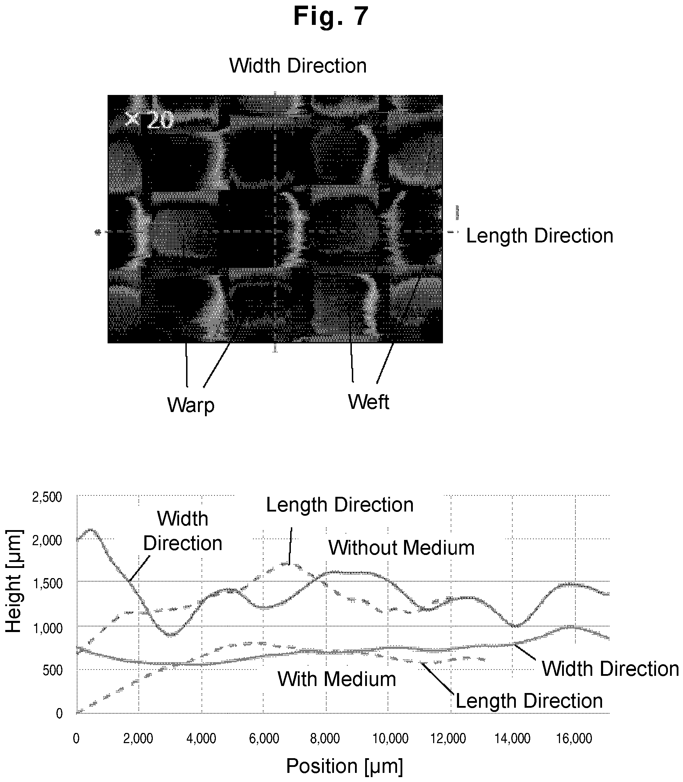

Fig. 7 shows a map and a plot of unevenness of the surface of the completed FRP molded product measured with a digital microscope. Unevenness was measured in two directions along the width and the length with and without the flow medium.

It is evident from the plot that large unevenness occurred along the texture of the fiber base material without the flow medium, and that unevenness is small and plane smoothness is high with the flow medium.

### APPLICABILITY FOR INDUSTRIAL USE

This invention is a flow medium, an FRP molded product and a manufacturing method of the FRP molded product that can enhance plane smoothness of the FRP molded product and suppress the occurrence of vulnerable parts, and has industrial applicability.

### REFERENCES

10: Flow medium
20: FRP molded product
30: Fiber base material
40: Matrix resin
50: Vacuum bag
51: Mold
52: Cavity
52a: Resin injection port
52b: Suction port
53: Sealing material
54: Resin tank
55: Resin injection route
56: Valve
57: Suction route
58: Valve
100: Fiber base material
100a: Front face side
101: Flow medium
102: Matrix resin
103: FRP molded product
103a: Front face
104: Unevenness
200: Vacuum bag
201: Mold
202: Cavity
203: Fiber base material
203a: Front face side
203b: Back face side
204: Matrix resin
205: FRP molded product
206: Unevenness
207: Flow medium
208: Dry spot

## Claims

1. A flow medium that has a sheet shape and comprises fibers made of a phenoxy resin.

2. The flow medium according to Claim 1, wherein
The phenoxy resin is **characterized in** having a weight average molecular weight of 25,000 to 50,000.

3. An FRP molded product formed by impregnating a fiber base material with a matrix resin using a flow medium, wherein
the flow medium has a sheet shape and comprises fibers made of a phenoxy resin,
the fiber base material and the flow medium are stacked, and
at least part of the flow medium is hardened in a state where the part of the flow medium is integrated with the matrix resin by dissolution or adhesion.

4. The FRP molded product according to Claim 3, wherein
the flow medium is stacked on a front face side of the fiber base material.

5. The FRP molded product according to either Claim 3 or Claim 4, wherein
the matrix resin is **characterized in** being an epoxy resin.

6. A manufacturing method of an FRP molded product wherein a fiber base material is impregnated with a matrix resin and hardened using a flow medium inside a cavity, comprising:
a step of stacking the fiber base material and a sheet-shaped flow medium comprising fibers made of a phenoxy resin inside the cavity, and
a step of injecting the matrix resin, thereby integrating at least part of the flow medium with the matrix resin by dissolution or adhesion.

7. The manufacturing method of the FRP molded product according to Claim 6, wherein
the flow medium is stacked on a front face side of the fiber base material.

8. The manufacturing method of the FRP molded product according to either Claim 6 or Claim 7, wherein
the matrix resin is **characterized in** being an epoxy resin.
